# DEMANDE DE BREVET EUROPEEN

(11) **EP 1 205 296 A1**
(43) Date de publication de la demande: **15.05.2002**
(21) Numéro de dépôt: 01402876.5
(22) Date de dépôt: 08.11.2001
(51) Int. Cl.: B32B 7/14, B65D 77/20, B65D 75/20, B65D 75/48

(54) **Feuille d'emballage et emballage la comportant**

(30) Priorité: 08.11.2000 FR 0014347
(71) Demandeur: Amcor Flexibles France, 16300 Barbezieux St Hilaire (FR)
(72) Inventeur: Hauchecorne, Jacques, 61160 Chambois (FR)
(74) Mandataire: Blot, Philippe Robert Emile

(57) **Abrégé**

La feuille d'emballage comporte au moins deux films (14, 16) entre lesquels est interposée une couche de colle (22) assurant le complexage des deux films l'un contre l'autre. Elle présente au moins une zone repérée (18) essentiellement dépourvue de colle où les deux films (14, 16) sont indépendants, la ou chaque zone repérée (18) étant bordée suivant toute sa périphérie d'un contour fermé (20) où les films (14, 16) sont collés l'un contre l'autre par ladite couche de colle (22), la feuille présentant ainsi, dans la ou chaque zone repérée (18), un espace clos (24) défini entre les deux films (14, 16).

## Description

La présente invention concerne une feuille d'emballage, du type comportant au moins deux films entre lesquels est interposée une couche de colle assurant le complexage des deux films l'un contre l'autre.

Elle concerne en outre des emballages comportant une telle feuille.

On connaît des emballages définissant deux espaces clos distincts dans lesquels peuvent être confinés des produits.

Par exemple, on connaît des barquettes destinées à recevoir un produit alimentaire et dont l'opercule est constitué de deux films de polymère entre lesquels est formé un espace clos.

Initialement les deux films sont indépendants. Pour la fabrication de l'emballage, les deux films sont soudés simultanément l'un sur l'autre et sur le rebord de la barquette pour assurer son obturation. Lors de la mise en place des films sur la barquette, un insert, tel qu'une cartonette publicitaire, peut être interposé entre les deux films.

Ainsi, la solidarisation des deux films l'un avec l'autre autour de l'insert est assurée par soudage, lors du soudage de l'opercule sur la barquette. Lors d'une même opération, les deux films sont donc soudés entre eux et le film tourné vers la barquette est soudé sur le rebord de la barquette.

La fabrication d'un tel emballage nécessite l'utilisation d'une machine spécifique permettant de rapporter sur la barquette non pas un film mais deux films indépendants. Cette machine doit également permettre la mise en place d'un insert entre ces deux films. Enfin, elle doit être adaptée pour assurer le soudage simultané d'une part des deux films entre eux et d'autre part de l'un des films sur le rebord de la barquette.

On conçoit qu'un tel opercule, constitué de deux films initialement indépendants, est relativement délicat à mettre en oeuvre et occasionne des frais d'installation très importants pour l'entreprise qui assure le conditionnement des produits.

L'invention a pour but de proposer une feuille d'emballage dont la fabrication est aisée et dont la mise en oeuvre, lors de l'opération d'emballage d'articles, est aisée, cette feuille d'emballage permettant de définir plusieurs espaces clos dans un même emballage.

A cet effet, l'invention a pour objet une feuille d'emballage, du type précité, caractérisée en ce qu'elle présente au moins une zone repérée essentiellement dépourvue de colle où les deux films sont indépendants, la ou chaque zone repérée étant bordée suivant toute sa périphérie d'un contour fermé où les films sont collés l'un contre l'autre par ladite couche de colle, la feuille présentant ainsi, dans la ou chaque zone repérée, un espace clos défini entre les deux films.

Suivant des modes particuliers de réalisation, la feuille d'emballage comporte l'une ou plusieurs des caractéristiques suivantes :
- le ou chaque espace clos est essentiellement vide ;
- le ou chaque espace clos est empli d'au moins l'un des éléments choisi dans le groupe consistant en un gaz, un liquide et un solide ;
- elle comporte, dans la ou chaque zone repérée, au moins une région ponctuelle de collage où de la colle est interposée entre les deux films ; et
- la ou chaque région ponctuelle de collage est séparée du contour fermé où les films sont collés l'un contre l'autre.

L'invention a en outre pour objet un emballage comportant une barquette munie d'un rebord périphérique et un opercule d'obturation de la barquette soudé sur ledit rebord, caractérisé en ce que ledit opercule est une feuille d'emballage selon l'une quelconque des revendications précédentes, laquelle feuille est soudée sur le rebord suivant une région de la feuille où les deux films sont complexés par la couche de colle.

Suivant un mode particulier de réalisation, ledit opercule présente au moins deux espaces clos adjacents.

De plus, elle a également pour objet un emballage souple constitué essentiellement d'au moins une feuille repliée et soudée autour des produits à emballer pour former une poche fermée, caractérisé en ce qu'au moins une feuille est une feuille d'emballage telle que décrite ci-dessus.

Suivant des modes particuliers de réalisation, l'emballage comporte l'une ou plusieurs des caractéristiques suivantes :
- la feuille comporte une unique zone repérée essentiellement dépourvue de colle, et ladite zone repérée s'étend sur seulement une face dudit emballage ; et
- la feuille comporte une unique zone repérée essentiellement dépourvue de colle, et ladite zone repérée s'étend sur l'essentiel de la surface de l'emballage.

L'invention sera mieux comprise à la lecture de la description qui va suivre, donnée uniquement à titre d'exemple et faite en se référant aux dessins, sur lesquels :
- la figure 1 est une vue en perspective, avec arrachement partiel, d'une bande formée d'une succession de feuilles d'emballage selon l'invention ;
- la figure 2 est une vue en perspective et en coupe d'un emballage selon l'invention incorporant une barquette ;
- les figures 3, 4 et 5 sont des vues en perspective et en coupe pour les figures 3 et 4 illustrant des étapes successives du procédé de fabrication de l'emballage de la figure 2 ;
- la figure 6 est une vue en perspective, avec arrachement partiel, d'un emballage souple formé à partir d'une feuille d'emballage selon l'invention ;
- la figure 7 est une vue en coupe d'une variante de réalisation d'un emballage souple selon l'invention ; et
- les figures 8 et 9 sont des vues respectivement en élévation et en section longitudinale d'une variante de réalisation d'une feuille d'emballage selon l'invention.

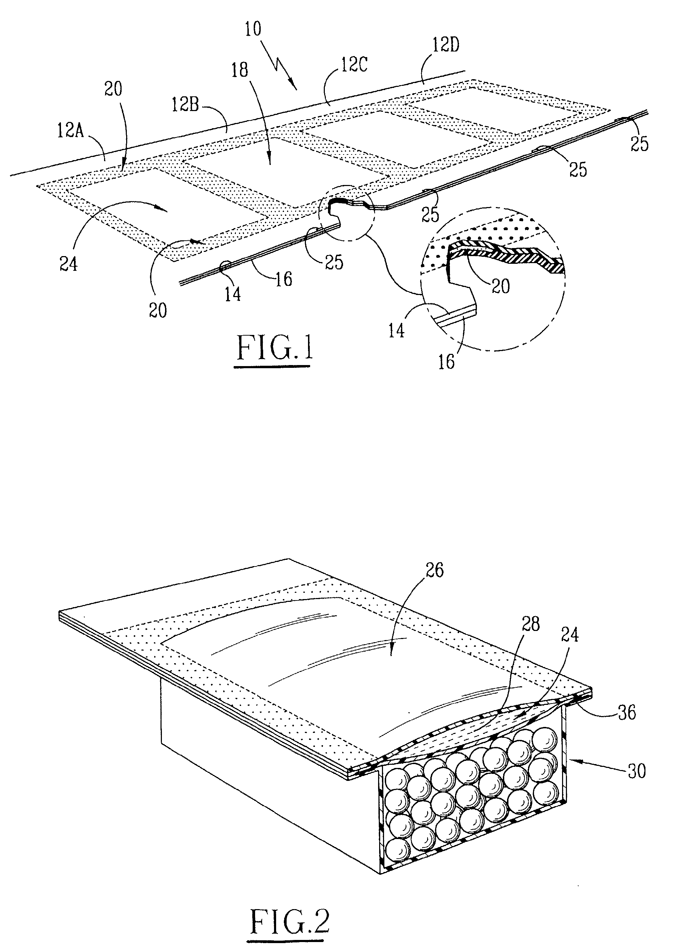

Sur la figure 1 est représentée une bande 10 constituée d'une succession de feuilles d'emballage 12A, 12B, 12C, 12D selon l'invention. Ces feuilles d'emballage sont liées les unes aux autres suivant la longueur de la bande. Elles sont destinées à être séparées les unes des autres par sectionnement transversal de la bande.

La bande, et donc chaque feuille d'emballage, est constituée de deux films de polymère partiellement complexés par collage suivant leurs faces en regard.

Plus précisément, chaque feuille comporte un film support 14 et un film soudant 16.

Le film support est par exemple constitué de base : polyéthylène téréphatalate, polypropylène, polyamide, polychlorure de vinyle, polystyrène et leurs variantes d'une épaisseur comprise entre 10 µm et 100 µm.

Le film soudant est par exemple constitué de base : polyéthylène, polypropylène, polychlorure de vinyle et leurs variantes d'une épaisseur comprise entre 10 µm et 100 µm.

Les deux films 14, 16 s'étendent l'un en regard de l'autre suivant toute leur surface. Pour chaque feuille, au moins une zone repérée 18, de forme rectangulaire dans l'exemple considéré, est dépourvue de toute liaison entre les deux films. Cette zone repérée 18 est bordée, suivant toute sa périphérie, d'un contour fermé 20 suivant lequel les films sont complexés l'un contre l'autre par une couche de colle 22. Sur la figure 1, la colle est illustrée par des points. Le contour fermé 20 définit ainsi un cadre délimitant un espace clos 24 s'étendant entre les deux films 14 et 16.

Dans le mode de réalisation représenté, les contours fermés de deux feuilles adjacentes sont contigus deux à deux suivant un côté. Le sectionnement ultérieur de la bande entre deux feuilles successives s'effectue dans une région où les deux films sont complexés par collage. Ce sectionnement a lieu au niveau de repères d'impression 25 imprimés sur la marge de la bande. Il peut se faire avant formation de l'emballage proprement dit ou après.

Dans le mode de réalisation illustré sur la figure 1, le contour fermé 20 délimitant chaque espace clos 24 s'étend à l'écart des marges de la bande.

L'espace clos 24 défini entre les deux films et délimité à sa périphérie par le contour fermé 20 peut être essentiellement vide, ou celui-ci peut être empli d'un gaz, d'un liquide ou d'un solide. Ce remplissage peut s'effectuer avant ou après collage des deux films l'un sur l'autre suivant le contour 20.

Sur la figure 2 est représenté un emballage comportant une feuille d'emballage 26 selon l'invention dont l'espace clos 24 est empli d'un fluide 28 tel qu'un liquide coloré.

Cet emballage comporte une barquette 30 présentant un rebord périphérique 36 suivant le pourtour duquel la feuille d'emballage 26 formant opercule est thermosoudée. Avantageusement, l'opercule 26 est soudé sur le rebord 36 suivant le contour fermé 20 de la feuille d'emballage, c'est-à-dire dans la région de la feuille d'emballage où les deux films 14, 16 sont complexés l'un à l'autre par collage.

On conçoit qu'avec un emballage tel que décrit sur la figure 2, il est possible de disposer des produits d'une part dans l'espace clos délimité entre la barquette 30 et l'opercule 26 et d'autre part dans l'espace clos 24 défini entre les deux films constituant l'opercule.

Dans le mode de réalisation décrit en regard de la figure 2, un unique espace clos est délimité par l'opercule.

En variante non représentée, au moins deux espaces clos sont délimités par l'opercule dans sa région obturant la barquette.

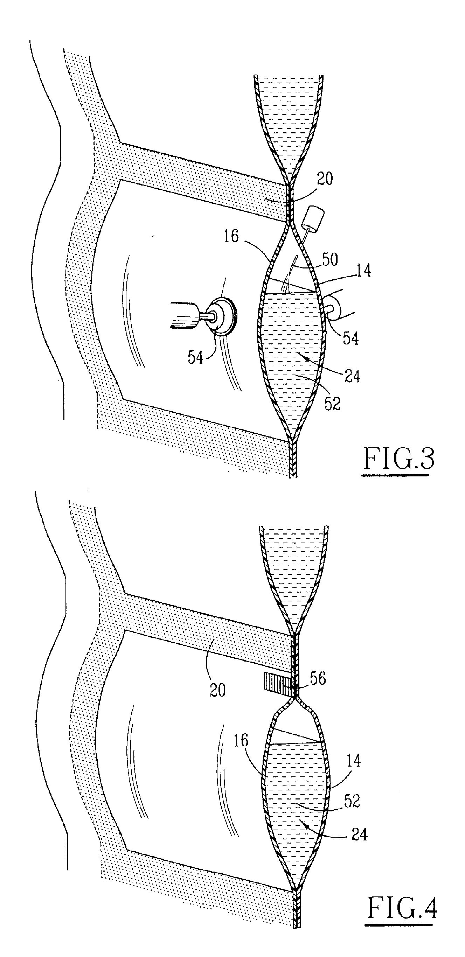

Le procédé de fabrication d'un tel emballage va maintenant être décrit en regard des figures 3 à 5.

La feuille d'emballage est formée d'abord par complexage par zone de deux films de polymère en forme de bande. Ce complexage est assuré par exemple en sortie d'un poste d'impression au travers duquel circule l'une des bandes. Dans ce poste d'impression, l'encre est remplacée par de la colle. La colle est appliquée en des zones repérées du film, ces zones correspondant aux régions où les deux films doivent être complexés. L'application de la colle s'effectue par exemple grâce à un cylindre ou une plaque gravée. Le film support, enduit de colle, est ensuite appliqué contre le film soudant, en pression, par un groupe cylindre dit de calandrage. Une bande formée à la suite ou complexe est illustrée sur la figure 1. La bande est ensuite enroulée pour former une bobine. Elle est laissée ainsi vingt-quatre heures afin d'assurer une polymérisation de la colle.

La colle utilisée est par exemple à base polyméthane mono ou bi composants.

Après complexage par zone de la bande telle qu'illustrée sur la figure 1, chaque espace clos 24 est empli d'un fluide tel qu'un liquide. A cet effet, une aiguille 50 visible sur la figure 3 est introduite au travers de l'un des films 14 et 16, de sorte que son extrémité est reçue entre les deux films 14, 16 dans l'espace clos 24. Le fluide 52 devant être conditionné dans l'espace clos 24 est injecté au travers de l'aiguille 50.

Avantageusement, les deux films 14 et 16 sont écartés l'un de l'autre dans la zone repérée 18 où les deux films ne sont pas collés l'un à l'autre. Cet écartement s'effectue, par exemple, par des ventouses 54 appliquées sur les surfaces externes des films 14 et 16, les deux ventouses étant écartées l'une de l'autre.

Après remplissage de l'espace clos 24, la région du film perforée par le passage de l'aiguille 50 est obturée de manière à rétablir l'étanchéité de l'espace 24. A cet effet, les deux films sont par exemple scellés l'un contre l'autre dans la région de la perforation par une soudure 56 visible sur la figure 4. Les deux films peuvent également être sertis en rapportant mécaniquement un élément tel qu'un rivet.

Les espaces clos 24 de chacune des feuilles sont emplis successivement en continu, alors que les feuilles sont toujours liées les unes aux autres pour former une bande.

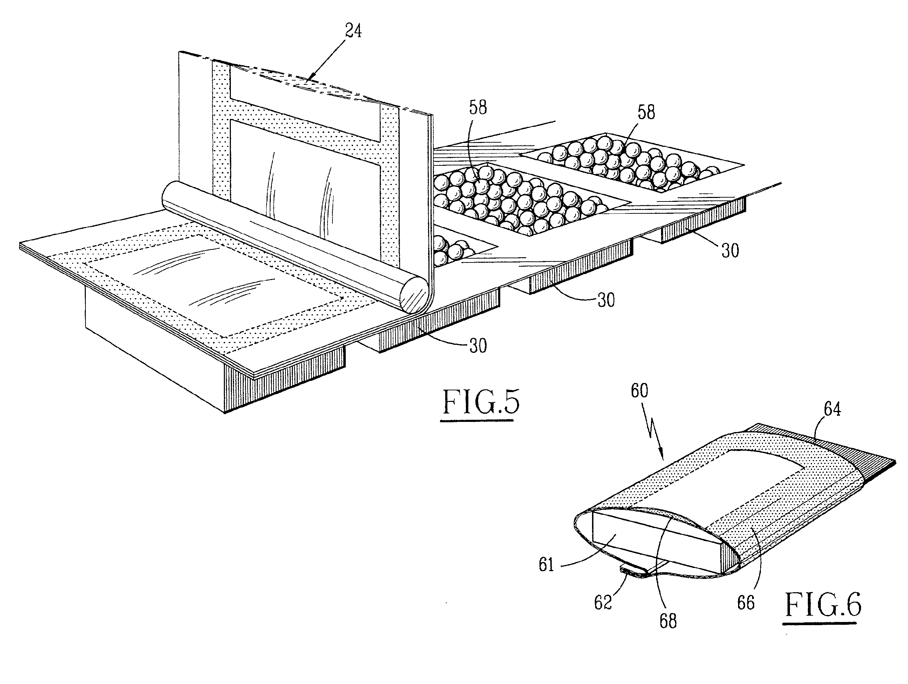

Pour la fabrication de l'emballage proprement dit et comme illustré sur la figure 5, des barquettes 30, initialement venues de matière les unes avec les autres, sont d'abord remplies d'articles 58 à emballer. La bande constituée des feuilles d'emballage dont les espaces clos 24 sont emplis de liquide 52 est alors rapportée sur le rebord des barquettes adjacentes. La bande est disposée de sorte que le contour fermé 20 suivant lequel les deux films 14, 16 sont complexés l'un à l'autre s'étend sur le rebord des barquettes, alors que les zones repérées 18 où est formé l'espace clos 24 s'étend dans la région de l'ouverture des barquettes.

Après mise en place de la bande sur les barquettes, chaque feuille d'emballage est soudée par apport de chaleur sur le rebord de la barquette. Les barquettes ainsi scellées sont ensuite séparées les unes des autres par tronçonnage. Lors de cette opération, la séparation simultanée des barquettes et des feuilles d'emballage les obturant est obtenue.

On conçoit qu'avec une feuille d'emballage selon l'invention, l'espace clos 24 peut être formé à l'écart de la machine assurant l'obturation des barquettes. En particulier, la feuille d'emballage peut être fabriquée dans une usine différente de l'usine où est réalisé l'emballage proprement dit des produits.

En effet, l'espace clos de chacune des feuilles d'emballage est complètement formé indépendamment de l'étape de thermosoudage des feuilles d'emballage sur les barquettes.

On conçoit qu'ainsi, l'espace clos 24 étant totalement formé sans thermosoudage, le thermosoudage mis en oeuvre pour le scellage de opercule sur la barquette peut être réalisé dans une machine conventionnelle, sans qu'il soit nécessaire de prendre des précautions particulières pour la définition de l'espace clos 24, celui-ci étant pré-existant.

Sur la figure 6, est représenté un autre mode de réalisation d'un emballage réalisé à partir d'une feuille d'emballage selon l'invention.

On reconnaît sur cette figure un sachet d'emballage 60 constitué d'une unique feuille d'emballage repliée sur elle-même autour d'un articule 61 à emballer. Les bords longitudinaux de la feuille d'emballage sont soudés l'un sur l'autre pour former une soudure longitudinale 62. A chacune des extrémités, le tube ainsi formé autour du produit 61 est obturé par des soudures transversales 64.

Selon l'invention, la feuille d'emballage est formée de deux films complexés l'un à l'autre par collage, avant mise en forme proprement dite de l'emballage, ce complexage étant réalisé uniquement suivant un contour fermé 66 délimitant ultérieurement une région repérée dépourvue de colle interposé entre les deux films, cette région formant un espace clos 68.

Dans ce mode de réalisation, l'espace clos 68 défini par le contour fermé s'étend seulement sur une face principale de l'emballage. En dehors de la région de l'espace clos 68, les films sont complexés par collage.

En particulier, la soudure longitudinale 62 et les soudures transversales 64 s'étendent dans la région où les deux films sont complexés.

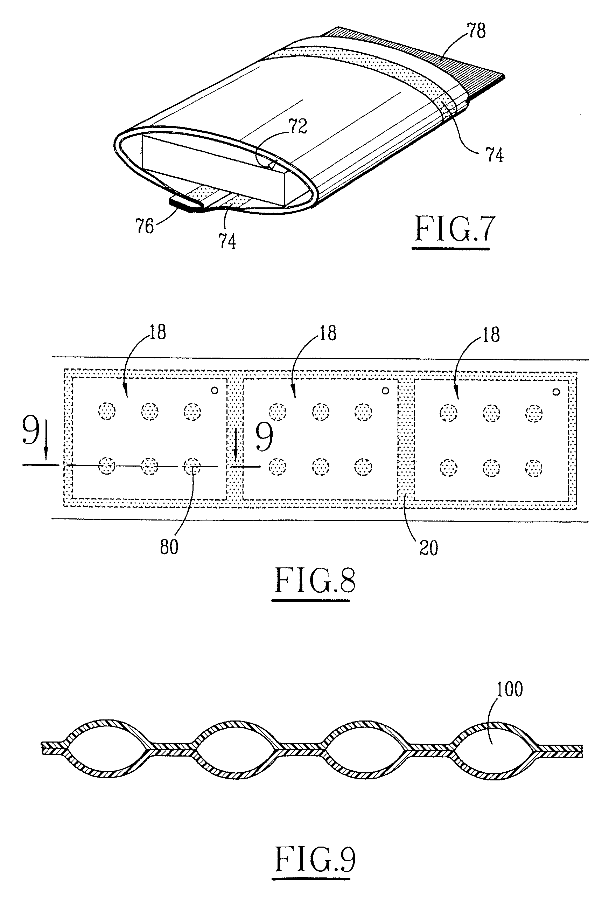

Dans le mode de réalisation noté 70 de la figure 8, l'espace clos noté 72 défini entre les deux films s'étend sur l'essentiel de la surface de l'emballage, le contour fermé, noté 74, s'étendant le long de la soudure longitudinale notée 76 du sachet et le long des soudures transversales notées 78 de celui-ci. Les soudures 76 et 78 sont toutefois ménagées à l'écart du contour fermé 74.

Dans le modes de réalisation des figures 7 et 8, l'espace clos délimité entre les deux films peut être vide ou empli d'un fluide ou d'un solide. Dans le mode de réalisation de la figure 7, une cartonnette publicitaire est par exemple disposée dans l'espace clos 68.

Cette cartonnette publicitaire est interposée entre les deux films, avant complexage de ceux-ci suivant le contour fermé 66 ceinturant l'espace clos.

Sur les figures 8 et 9 est représentée une variante de réalisation de feuilles d'emballage selon l'invention.

Les éléments identiques ou analogues à ceux de la figure 1 sont désignés par les mêmes numéros de référence.

Dans cette variante de réalisation, les régions repérées 18 essentiellement dépourvues de colle entre les deux films, et délimitées par les contours fermés 20 présentent des régions ponctuelles 80 de collage des deux films. Ces régions ponctuelles de collage sont régulièrement espacées suivant la surface des régions repérées 18. Elles ont chacune la forme d'une pastille suivant la surface de laquelle les deux films sont complexés par collage. Avantageusement, les régions de collage ponctuelles 80 sont espacées du contour fermé 20.

Comme précédemment, l'espace clos noté 100 peut être empli d'un fluide, et avantageusement d'un gaz. Dans ce cas, et comme illustré sur la figure 9, l'espace clos 100 délimité par le contour fermé 20 constitue, du fait de la présence des régions ponctuelles de collage, un matelassage.

De telles feuilles d'emballage peuvent être utilisées pour le conditionnement de produits fragiles, ou encore pour conditionner des produits sensibles à la température, le gaz contenu dans l'espace clos 24 formant une barrière thermique.

## Revendications

1. Feuille d'emballage, du type comportant au moins deux films (14, 16) entre lesquels est interposée une couche de colle (22) assurant le complexage des deux films l'un contre l'autre, **caractérisée en ce qu'**elle présente au moins une zone repérée (18) essentiellement dépourvue de colle où les deux films (14, 16) sont indépendants, la ou chaque zone repérée (18) étant bordée suivant toute sa périphérie d'un contour fermé (20) où les films (14, 16) sont collés l'un contre l'autre par ladite couche de colle (22), la feuille présentant ainsi, dans la ou chaque zone repérée (18), un espace clos (24) défini entre les deux films (14, 16).

2. Feuille d'emballage selon la revendication 1, **caractérisée en ce que** le ou chaque espace clos (24) est essentiellement vide.

3. Feuille d'emballage selon la revendication 1 ou 2, **caractérisée en ce que** le ou chaque espace clos (24) est empli d'au moins l'un des éléments choisi dans le groupe consistant en un gaz, un liquide et un solide.

4. Feuille d'emballage selon l'une quelconque des revendications précédentes, **caractérisée en ce qu'**elle comporte, dans la ou chaque zone repérée (18), au moins une région ponctuelle (80) de collage où de la colle est interposée entre les deux films (14, 16).

5. Feuille d'emballage selon la revendication 4, **caractérisée en ce que** la ou chaque région ponctuelle (80) de collage est séparée du contour fermé (20) où les films sont collés l'un contre l'autre.

6. Emballage comportant une barquette (34) munie d'un rebord périphérique (36) et un opercule d'obturation (26) de la barquette soudé sur ledit rebord (36), **caractérisé en ce que** ledit opercule (26) est une feuille d'emballage selon l'une quelconque des revendications précédentes, laquelle feuille est soudée sur le rebord (36) suivant une région (20) de la feuille où les deux films (14, 16) sont complexés par la couche de colle (22).

7. Emballage selon la revendication 6, **caractérisé en ce que** ledit opercule (26) présente au moins deux espaces clos adjacents.

8. Emballage souple (60, 70) constitué essentiellement d'au moins une feuille repliée et soudée autour des produits à emballer pour former une poche fermée, **caractérisé en ce qu'**au moins une feuille est une feuille d'emballage selon l'une quelconque des revendications précédentes.

9. Emballage selon la revendication 8, **caractérisé en ce que** la feuille comporte une unique zone repérée (18) essentiellement dépourvue de colle, et **en ce que** ladite zone repérée (18) s'étend sur seulement une face dudit emballage.

10. Emballage selon la revendication 8, **caractérisé en ce que** la feuille comporte une unique zone repérée (18) essentiellement dépourvue de colle, et **en ce que** ladite zone repérée (18) s'étend sur l'essentiel de la surface de l'emballage.
